# EUROPÄISCHE PATENTSCHRIFT

(11) **EP 0 970 319 B1**
(45) Veröffentlichungstag und Bekanntmachung des Hinweises auf die Patenterteilung: **13.06.2001**
(21) Anmeldenummer: 98910601.8
(22) Anmeldetag: 11.02.1998
(51) Int. Cl.: F16H 61/38, B60K 41/14, B60K 41/22

(54) **VORRICHTUNG UND VERFAHREN ZUR SCHLUPFMINDERUNG BEI DER STEUERUNG EINES CVT FÜR EIN KRAFTFAHRZEUG**
DEVICE AND METHOD FOR REDUCING SLIP IN THE CONTROL SYSTEM OF A CVT IN A MOTOR VEHICLE
DISPOSITIF ET PROCEDE POUR REDUIRE LE PATINAGE LORS DE LA COMMANDE D'UNE TRANSMISSION A CHANGEMENT DE VITESSES CONTINU DANS UN VEHICULE A MOTEUR

(30) Priorität: 25.03.1997 DE 19712451
(43) Veröffentlichungstag der Anmeldung: 12.01.2000
(73) Patentinhaber: ROBERT BOSCH GMBH, 70442 Stuttgart (DE)
(72) Erfinder: BOLZ, Martin-Peter, D-71720 Oberstenfeld (DE); HUELSER, Holger, D-70329 Stuttgart (DE)
(86) Internationale Anmeldenummer: DE9800374
(87) Internationale Veröffentlichungsnummer: WO9843003

(56) Entgegenhaltungen:
- EP-A- 0 446 497
- EP-A- 0 530 381
- WO-A-92/18791
- DE-A- 4 021 520
- US-A- 3 451 283
- PATENT ABSTRACTS OF JAPAN vol. 012, no. 286 (M-727), 5.August 1988 -& JP 63 062954 A (FUJI HEAVY IND LTD), 19.März 1988,
- PATENT ABSTRACTS OF JAPAN vol. 012, no. 292 (M-729), 10.August 1988 -& JP 63 067457 A (MAZDA MOTOR CORP), 26.März 1988,
- PATENT ABSTRACTS OF JAPAN vol. 012, no. 004 (M-657), 8.Januar 1988 & JP 62 167966 A (YAMAHA MOTOR CO LTD), 24.Juli 1987,
- PATENT ABSTRACTS OF JAPAN vol. 010, no. 171 (M-489), 17.Juni 1986 & JP 61 021461 A (NIPPON DENSO KK), 30.Januar 1986,

## Beschreibung

Die Erfindung betrifft eine Vorrichtung bzw. ein Verfahren zur Steuerung eines stufenlos in seiner Übersetzung verstellbaren Getriebes bei einem Kraftfahrzeug mit den Merkmalen der Oberbegriffe der Ansprüche 1 bzw. 9.

Als gattungsbildendes Dokument gilt die WO-A-9 218 791.

In Kraftfahrzeugen mit einem bekannten stufenlos verstellbaren Getriebe (CVT) mit Umschlingungselement (z.B. Schubgliederband oder Kette) muß die Anpreßkraft der Kegelscheiben (pulleys) gegen das Schubgliederband durch geeignete Maßnahmen so eingestellt werden, daß das zu übertragende Moment übertragen werden kann. Ist die Anpreßkraft zu gering, kommt es zu einem hohen Schlupf zwischen dem Umschlingungselement und den pulleys, der zur Beschädigung führen kann. Ist die Anpreßkraft allerdings größer als zur Schlupfvermeidung unbedingt notwendig, so sinkt der Wirkungsgrad des Getriebes ab, was zu einem unnötig hohen Kraftstoffverbrauch führt. Deshalb ist es günstig, die Anpreßkraft so zu wählen, daß das bei dieser Anpreßkraft maximal übertragbare Moment nur geringfügig größer ist als das aktuell zu übertragende Moment. Kommt es dennoch zu einem erhöhten Schlupf des Umschlingungselementes, so müssen Maßnahmen ergriffen werden, um die Relativbewegung des Umschlingungselementes so zu stabilisieren bzw. zu stoppen, daß Beschädigungen vermieden werden.

Konventionelle CVT-Steuerungen, wie sie beispielsweise aus der EP,A1,0 451 887 bekannt sind, bestimmen das Getriebeeingangsmoment aus dem vom Motor abgegebenen Drehmoment und der Wandlerverstärkung. Aus diesem Moment wird eine Bandspannung berechnet, aus der eine Anpreßkraft resultiert, die eine sichere Ubertragung dieses Moments ermöglicht. Hierbei wird in der Regel eine erhebliche Sicherheitsreserve berücksichtigt, die einen höheren Kraftstoffverbrauch zur Folge hat. Sollte dennoch ein unzulässig hoher Schlupf auftreten, so wird im allgemeinen die Anpreßkraft und damit die Bandspannung erhöht. Durch die Zeitkonstanten des hydraulischen und des mechanischen Systems der Bandspannungseinstellung ist jedoch die Geschwindigkeit, mit der hier auf einen übermäßigen Schlupf reagiert werden kann, eingeschränkt.

Aus der EP,B1,0 446 497 (entspricht der US 5,098,345) ist ein System zum Schutz gegen eine Überschreitung eines Maximalschlupfes des Bandes bekannt. Hierbei wird eine Kupplung derart angesteuert, daß diese Kupplung immer bei geringeren Antriebsmomenten in Schlupf gerät als das Band. Eine Reaktion auf einen möglichen Schlupf des Bandes ist hier nicht beschrieben.

Die Erfassung des Bandschlupfes ist in vielerlei Ausgestaltungen bekannt. So wird beispielsweise gemäß der DE-OS 44 11 628 vorgeschlagen, die Geschwindigkeit des Umschlingungselements zu erfassen. Weiterhin kann der Bandschlupf durch einen Sensor erfaßt werden, der gleichzeitig die axiale Verschiebung eines Kegelscheibenpaares und die Drehzahl dieses Paares erfaßt. Aus der älteren DE-Patentanmeldung 196 38 277.7 ist bekannt, zur Schlupferfassung wenigstens zwei Sensoreinheiten vorzusehen, die im Bereich der Umschlingungsmittel und zwischen der Antriebs- und einer Abtriebsseite angeordnet sind.

Die Aufgabe der vorliegenden Erfindung besteht darin, bei einem übermäßigen Schlupf wirksame Maßnahmen vorzusehen, um eine Beschädigung des Getriebes sicher zu vermeiden.

Diese Aufgabe wird durch die Merkmale der Ansprüche 1 und 9 gelöst.

### Vorteile der Erfindung

Wie erwähnt geht die Erfindung aus von einer Steuerung eines stufenlos in seiner Übersetzung verstellbaren Getriebes bei einem Kraftfahrzeug. Das Getriebe ist dabei zusammen mit einer ein einstellbares Antriebsmoment aufweisenden Antriebseinheit in dem Antriebsstrang des Kraftfahrzeugs angeordnet und weist eine Antriebsseite sowie eine Abtriebsseite und Wirkmittel zur Herstellung einer mechanischen Wirkverbindung zwischen der Antriebs- und Abtriebsseite auf. Weiterhin sind Erfassungsmittel zur Erfassung einer den Schlupf zwischen den Wirkmitteln und der Antriebs- und/oder Abtriebsseite repräsentierenden Schlupfgröße vorgesehen. In Reaktion auf einen vorgebbaren Wert der Schlupfgröße werden dann vorgebbare Maßnahmen eingeleitet in Form einer Änderung der Getriebeübersetzung. Der Kern der Erfindung besteht darin, daß als Maßnahme
- eine Ansteuerung einer in dem Antriebsstrang angeordneten Kupplung, und/oder
- eine Änderung des Ausgangsmoments der Antriebseinheit
vorgegeben ist. Insbesondere ist dabei daran gedacht, daß die Maßnahmen im Sinne einer Schlupfverminderung eingeleitet werden.

In einer vorteilhaften Ausgestaltung der Erfindung ist als weitere Maßnahme eine Änderung des Anpreßdrucks zwischen der Antriebs- und/oder Abtriebsseite und dem Wirkmittel, insbesondere im Sinne einer Schlupfverminderung, vorgesehen.

Die vorliegende Erfindungsmeldung beschreibt, wie mit drei bzw. vier möglichen Eingriffen bei erkanntem Schlupf des Umschlingungselementes das Durchrutschen des Umschlingungselementes gestoppt und auf einen verträglichen Schlupf stabilisiert werden kann. Die Erfindung bietet die Möglichkeit, die vorgestellten Maßnahmen einzeln oder mit einer abgestimmten Strategie vorzunehmen. Abhängig von der jeweiligen Situation, die zum Durchrutschen des Umschlingungselementes führte, wird nach einer zuvor bestimmten Strategie mit einer Auswahl der erfindungsgemäßen Maßnahmen gleichzeitig oder in einer engen zeitlichen Folge reagiert. Dies geschieht immer mit dem Ziel, einen erkannten Schlupf schnellstmöglich zu unterdrücken und den Fahrer nicht durch die Auswirkung der Maßnahmen zu verwirren. Je nach Ausstattungsvariante des Fahrzeugs können eventuell nicht alle dieser Maßnahmen durchgeführt werden.

Insbesondere ist vorgesehen, daß als Maßnahme
- die Ansteuerung der Kupplung im Sinne eines Öffnens der Kupplung geschieht, und/oder
- die Änderung der Getriebeübersetzung in Reaktion auf eine positive Schlupfgröße im Sinne einer Erhöhung der Übersetzung und in Reaktion auf eine negative Schlupfgröße im Sinne einer Erniedrigung der Übersetzung geschieht, und/oder
- die Änderung des Ausgangsmoments der Antriebseinheit in Reaktion auf eine positive Schlupfgröße im Sinne einer Erniedrigung des Ausgangsmoments in Reaktion auf eine negative Schlupfgröße im Sinne einer Erhöhung des Ausgangsmoments geschieht.

Weiterhin ist es besonders vorteilhaft, daß
- das Ausmaß der Ansteuerung der Kupplung und/oder
- das Ausmaß der Änderung der Getriebeübersetzung, und/oder
- das Ausmaß der Änderung des Ausgangsmoments der Antriebseinheit und/oder
- das Ausmaß der Änderung des Anpreßdrucks
abhängig ist von dem Ausmaß der erfaßten Schlupfgröße.

In einer weiteren vorteilhaften Ausgestaltung der Erfindung ist vorgesehen, daß gleichzeitig oder zeitlich nach der Ansteuerung der Kupplung im Sinne eines Öffnens der Kupplung eine Änderung der Getriebeübersetzung und/oder eine Änderung des momentanen Ausgangsmoments der Antriebseinheit und/oder eine Änderung des Anpreßdrucks derart getätigt wird, daß das vom Getriebe maximal übertragbare Moment vom Betrag her wieder größer wird als der Betrag des momentanen Ausgangsmoments der Antriebseinheit. Auf diese Weise kann durch eine Erhöhung des maximal übertragbaren Moments der Kupplung (Schließen der Kupplung) der Kupplungsschlupf wieder reduziert werden.

Insbesondere ist vorgesehen, daß die Änderung des Ausgangsmoments der Antriebseinheit zur Schlupfverminderung unterstützend zu wenigstens einer der anderen Maßnahmen (Kupplungsansteuerung und/oder Änderung der Getriebeübersetzung und/oder Anpreßdruck) getätigt wird.

Wie schon beschrieben kann das Getriebe ein Umschlingungsgetriebe sein, wobei die Antriebsseite und/oder die Abtriebsseite wenigstens ein axial verschiebbares Element aufweist, das im wesentlichen die Form einer Kegelscheibe besitzt. Als Wirkmittel ist wenigstens ein Band, vorzugsweise ein Schubgliederband, oder ein Riemen oder eine Kette zwischen Scheibenpaaren, die die Antriebs- und die Abtriebsseite darstellen, eingespannt.

Weitere vorteilhafte Ausgestaltungen der Erfindung sind den Unteransprüchen und den im folgenden beschriebenen Ausführungsbeispielen zu entnehmen. Zeichnung

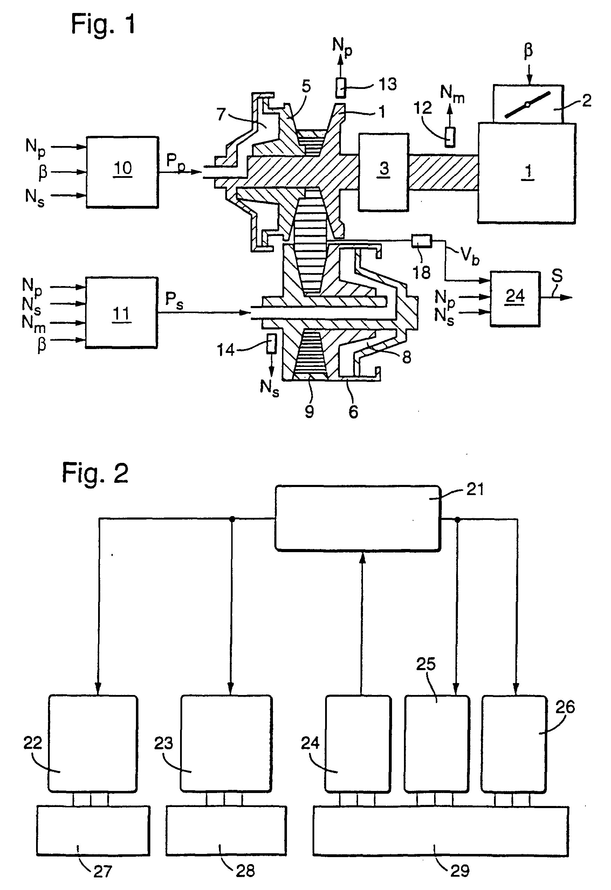

Die Figur 1 zeigt schematisch ein CVT mit einer bekannten Steuerung der Anpreßkraft, während die Figur 2 das Ausführungsbeispiel anhand eines Blockschaltbildes darstellt.

### Ausführungsbeispiel

Die Erfindung soll im folgenden anhand der Ausführungsbeispiele detalliert beschrieben werden.

In der Figur 1 ist ein bekannter Aufbau eines CVT-Getriebes im Schnitt dargestellt. Der Verbrennungsmotor 1 kann durch die Drosselklappe 2 in seinem abgegebenen Motormoment Mₘ beeinflußt werden. Die Drosselklappe 2 ist z.B. mechanisch oder elektrisch mit dem Fahrpedal (nicht dargestellt) gekoppelt. Der Verbrennungsmotor 1 ist meist mittels einer Kupplung und/oder einem Wandler 3 an die Antriebs- (Primär-) Seite des CVT-Getriebes 4 angekoppelt. Die Abtriebs(Sekundär-) Seite des CVT-Getriebes 4 ist über ein nachgeschaltetes Getriebe (nicht dargestellt) mit den Rädern des Fahrzeugs verbunden. Das CVT-Getriebe besitzt auf der Primär- und Sekundärseite je eine axial verschiebbare Kegelscheibe 5 und 6. Zur Verstellung der übersetzung wird in den Ölkammern 7 und 8 ein entsprechender Primärdruck Pₚ bzw. Sekundärdruck Pₛ aufgebaut. Durch eine geeignete Wahl der Stellgrößen Primärdruck Pₚ und Sekundärdruck Pₛ muß gewährleistet werden, daß
1. die Getriebeübersetzung i dem gewünschten Verhältnis von Primärdrehzahl Nₚ und Sekundärdrehzahl Nₛ entspricht, und
2. das kraftübertragende Schubgliederband 9 (bzw. Kette, Band) ausreichend stark an die Scheiben angepreßt wird, um ein Durchrutschen des Schubgliederbandes 9 zu verhindern.

Der obengenannte Punkt 1 wird durch eine elektrohydraulische Übersetzungs- oder Primärdrehzahlregelung 10 realisiert. Für den Punkt 2 wird eine Bandspannungsregelung 11 eingesetzt.

Zur Übersetzungs- und Bandspannungsregelung sind am Motor 1 und an dem CVT-Getriebe 4 Drehzahlsensoren 12, 13 und 14 vorhanden, welche die Motordrehzahl Mₘ, die Primärdrehzahl Nₚ und die Sekundärdrehzahl Nₛ erfassen.

In dem häufig eingesetzten und in der Figur 1 gezeichneten Master-Slave-Prinzip dient der Sekundärdruck Pₛ zur Einstellung der Bandspannung und der Primärdruck Pₚ zur Einstellung der Übersetzungs- bzw. Primärdrehzahl. Bei dem alternativ möglichen Partner-Prinzip beeinflußt die Bandspannungsregelung sowohl den Primär- als auch den Sekundärdruck.

Allgemein kann man davon sprechen, daß für die Bandspannungsregelung ein Stellsignal in Form einer Druckgröße P_{B} zur Verfügung steht. Aus der Literatur sind mehrere Verfahren zur Regelung der Bandspannung bekannt, die jedoch alle in ähnlicher Form arbeiten.

In der Figur 1 ist mit dem Bezugzeichen 18 ein Sensor gekennzeichnet, der die Geschwindigkeit V_{b} des Bandes 9 erfaßt. Im Block 24 wird aus der Bandgeschwindigkeit V_{b}, der Primär- und Sekundärdrehzahl Nₚ und Nₛ der aktuelle Bandschlupf S wie in der eingangs erwähnten DE-OS 44 11 628 ermittelt. Es sei aber darauf hingewiesen, daß die Schlupfbestimmung auch anders getätigt werden kann, ohne den erfindungsgemäßen Gedanken zu verlassen.

In der Figur 2 sind die vier möglichen Eingriffen zur Schlupfverminderung dargestellt. Mit den Bezugszeichen 27, 28 und 29 ist der Antriebsmotor 27 mit der zugehörigen Motorsteuerung 22, die Kupplung 28 mit der zugehörigen Kupplungssteuerung 23 sowie das CVT-Getriebe 29 mit der schon beschriebenen Schlupferfassung 24, die Bandspannungsregelung 25 und die Übersetzungsregelung 26 dargestellt.

Durch den Block 21 "Schlupfeingriff" werden in Reaktion auf einen erkannten übermäßigen Schlupf S des Umschlingungselementes die einzelnen Aktionen zur Reduzierung des Durchrutschens des Umschlingungselementes abgestimmt, um den Schlupf zu stoppen bzw. auf einen verträglichen Schlupf zu stabilisieren. Abhängig von der jeweiligen Situation die zum Durchrutschen des Umschlingungselementes 9 führte, wird nach einer zuvor bestimmten Strategie mit einer Auswahl der hier beschriebenen Maßnahmen gleichzeitig oder in einer engen zeitlichen Folge reagiert. Immer mit dem Ziel einen erkannten Schlupf schnellstmöglich zu unterdrücken und den Fahrer nicht durch die Auswirkung der Maßnahmen zu verwirren.

Je nach Ausstattungsvariante des Fahrzeugs können eventuell nicht alle dieser Maßnahmen durchgeführt werden.

### Erhöhung der Bandspannung (Block 25):

Erkennt die Schlupferkennung 21 einen erhöhten Schlupf S, so kann die Spannung des Umschlingungselementes 9 erhöht werden, um durch eine erhöhte Anpreßkraft den Schlupf S auf ein erträgliches Maß zu reduzieren. Die Erhöhung ΔF erfolgt unabhängig vom Vorzeichen des erkannten Schlupfes S.

Besonders vorteilhaft ist es, die Größe ΔF der zusätzlichen Spannung des Umschlingungselementes 9 abhängig vom Betrag des erkannten Schlupfes S zu wählen. Hierbei ist zu bedenken, daß wegen des Übergangs von Haft- zu Gleitreibung zwischen Umschlingungselement und Pulley bei erhöhtem Schlupf die Anpreßkraft stark erhöht werden muß, um den Schlupf zu reduzieren. Es ist also vorteilhaft, wenn die zusätzliche Bandspannung ΔF nicht linear vom erkannten Schlupf S abhängt. Wie schon erwähnt ist durch die Zeitkonstanten des hydraulischen und des mechanischen Systems die Geschwindigkeit, mit der hier reagiert werden kann, eingeschränkt.

### Übersetzungsverstellung (Block 26) :

Erkennt die Schlupferkennung 24 einen erhöhten Schlupf S, so kann die Übersetzung i des stufenlosen Getriebes so verstellt werden, daß die geometrische Übersetzung wieder der Drehzahlübersetzung entspricht.

Bei einem erkannten positiven Schlupf bedeutet dies, daß der Schlupfeingriff eine positive Zusatz-Übersetzung Δi, d.h. eine größere Übersetzung als ohne Eingriff fordert. Umgekehrt sollte bei erkanntem negativen Schlupf S eine negative Zusatz-Übersetzung Δi gefordert werden, die die Übersetzung i des Getriebes reduziert.

Besonders vorteilhaft ist es, die Größe der Zusatz-Übersetzung Δi abhängig vom erkannten Schlupf S zu wählen.

Bei den heute üblichen Konstruktionen von CVTs ist dieser Eingriff bei positivem Schlupf besonders geeignet. Bei positivem Schlupf, bei dem das Motormoment Mₘ nicht mehr übertragen werden kann, steigt die Motordrehzahl stark an. Ohne eine zusätzliche Pumpenförderleistung zur hydraulischen Erhöhung der Anpreßkraft zu benötigen, kann die Zusatzübersetzung Δi durch das Ablassen von Öl aus dem Primärpulley realisiert werden. Diese Maßnahme sollte dann jedoch mit einem noch zu beschreibenden reduzierenden Motormomenteneingriff (Block 22) kombiniert werden.

### Momenteneingriff am Motor (Block 22, 27):

Erkennt die Schlupferkennung 21 einen erhöhten Schlupf S, so kann das vom Motor 27 abgegebene Drehmoment Mₘ verändert werden, um so das vom Getriebe zu übertragende Moment an das maximal übertragbare Moment Mₘₐₓ anzupassen und dadurch den Schlupf auf ein erträgliches Maß zu reduzieren.

Bei positivem Schlupf, wenn also die Getriebeeingangsdrehzahl Np höher ist als sie nach der geometrischen Ubersetzung sein sollte, muß das vom Motor 27 abgegebene Drehmoment Mₘ reduziert werden (das Zusatzmoment ΔMₘ ist negativ). Hierzu können alle Eingriffe benutzt werden, die auch bei einer bekannten Abtriebs-Schlupf-Regelung (ASR) Verwendung finden. Dies sind etwa ein Zündwinkeleingriff bei einem Ottomotor ohne elektronische Motorleistungssteuerung (E-Gas). Bei Motoren mit elektronischer Motorleistungssteuerung (E-Gas bzw. EDC) wird einfach ein geringeres Moment gefordert. In jedem Fall fordert der Schlupfeingriff ΔMₘ ein negatives Zusatz-Moment.

Ist das Schleppmoment des Motors 27 vom Betrag her größer als das vom Getriebe maximal übertragbare Momement Mₘₐₓ, so ist die Getriebeeingangsdrehzahl Nₚ geringer als sie nach der geometrischen Übersetzung sein sollte. In diesem Fall herrscht ein negativer Bandschlupf und das Schleppmoment des Motors 27 sollte verringert werden. Hierzu können alle Eingriffe dienen, die derzeit bei einer bekannten Motorschleppmomentregelung (MSR) Verwendung finden. Bei Motoren mit elektronischer Motorleistungssteuerung (E-Gas bzw. EDC) wird einfach ein höheres Moment gefordert. Dies bedeutet, daß der Schlupfeingriff bei negativem Schlupf ein positives Zusatz-Moment ΔMₘ fordert.

Besonders vorteilhaft ist es in beiden Fällen, die Größe des Zusatz-Moments ΔMₘ am Motor 27 abhängig vom Betrag S des erkannten Schlupfes zu wählen. Diese Eingriffe zeichnen sich durch ihre relativ kurzen Zeitkonstanten aus und sollten deshalb immer unterstützend zu den anderen in dieser Anmeldung vorgestellten angewendet werden.

### Kupplungseingriff (Block 23, 28):

Verfügt das Fahrzeug über eine, beispielsweise elektronisch, beeinflußbare Kupplung 28, so kann bei erkanntem Schlupf S des Umschlingungselementes 9 im Getriebe auch das maximal übertragbare Moment M_{K,max} der Kupplung 28 reduziert werden, damit der Schlupf an der Kupplung 28 anstatt am Umschlingungselement 9 auftritt. Dies ist vorteilhaft, da die Kupplung 28 von ihrer Bauart her so ausgelegt ist, daß sie eine gewisse Zeit lang einen höheren Schlupf aushält, ohne beschädigt zu werden.

Wird durch einen Kupplungseingriff ΔM_{K} das maximal übertragbare Moment M_{K,max} an der Kupplung 28 reduziert, so kann das Moment am Getriebeeingang vom Betrage her nicht größer sein als das maximal übertragbare Moment M_{K,max} der Kupplung. Auf diese Art gelingt es, das zu übertragende Moment des Getriebes 29 vom Betrag her kleiner als das maximal übertragbare Moment M_{get,max} des Getriebes 29 zu machen und so den Schlupf am Getriebe auf einen unkritischen Wert zu begrenzen.

Solange sich das Moment Mₘ am Motorausgang, die Anpreßkraft des Umschlingungselementes 9 und die Übersetzung i des Getriebes nicht verändern, tritt der Schlupf dann an der Kupplung 28 statt am Getriebe 29 auf. Aus den oben genannten Gründen ist dies vorteilhaft.

Besonders vorteilhaft ist es, durch eine der anderen drei beschriebenen Maßnahmen sicherzustellen, daß das vom Getriebe 29 maximal übertragbare Moment M_{get,max} vom Betrag her wieder größer wird als der Betrag des Motorausgangsmoments, um so durch eine Erhöhung (Schließen der Kupplung) des maximal übertragbaren Moments M_{K,max} der Kupplung den Schlupf an der Kupplung 28 reduzieren zu können.

Zusammenfassend kann gesagt werden, daß die beschriebenen Möglichkeiten einzeln oder in Kombination angewandt werden können. Insbesondere sollten situationsabhängig immer kombinierte Eingriffe derart ausgeführt werden, daß der Fahrer von den Eingriffen der Schlupfreglung nichts bemerkt. Innerhalb von wenigen (50 - 590ms) Millisekunden sollte wieder der vom Fahren gewünscht Zustand im Antriebsstrang des Fahrzeugs gelten, damit das Fahrzeug nicht unerwartet beschleunigt oder verzögert.

## Patentansprüche

1. Vorrichtung zur Steuerung eines stufenlos in seiner Übersetzung verstellbaren Getriebes (4) bei einem Kraftfahrzeug, wobei das Getriebe zusammen mit einer ein einstellbares Antriebsmoment (Mₘ) aufweisenden Antriebseinheit (1; 27) in dem Antriebsstrang des Kraftfahrzeugs angeordnet ist, eine Antriebsseite sowie eine Abtriebsseite und Wirkmittel (9) zur Herstellung einer mechanischen Wirkverbindung zwischen der Antriebs- und Abtriebsseite aufweist, und Erfassungsmitteln (24) zur Erfassung einer den Schlupf zwischen den Wirkmitteln und der Antriebs- und/oder Abtriebsseite repräsentierenden Schlupfgröße (S) und Mitteln (21), mittels der in Reaktion auf einen vorgebbaren Wert der Schlupfgröße als vorgebbare Maßnahme (26) eine Änderung (Δi) der Getriebeübersetzung (i) eingeleitet wird,
dadurch gekennzeichnet, daß
als zusätzliche weitere Maßnahme (25, 23)
- eine Änderung (ΔF) des Anpreßdrucks zwischen der Antriebs- und/oder Abtriebsseite und dem Wirkmittel im Sinne einer Schlupfverminderung, und/oder
- eine Ansteuerung (ΔM_{K}) einer in dem Antriebsstrang angeordneten Kupplung (28) vorgesehen ist.

2. Vorrichtung nach Anspruch 1, dadurch gekennzeichnet, daß als weitere Maßnahme (22) eine Änderung (ΔMₘ) des Ausgangsmoments der Antriebseinheit (27) eingeleitet wird.

3. Vorrichtung nach Anspruch 1 oder 2, dadurch gekennzeichnet, daß als Maßnahme
- die Ansteuerung (ΔM_{K}) der Kupplung (28) im Sinne eines Öffnens der Kupplung geschieht, und/oder
- die Änderung (Δi) der Getriebeübersetzung (i) in Reaktion auf eine positive Schlupfgröße im Sinne einer Erhöhung der Übersetzung und in Reaktion auf eine negative Schlupfgröße im Sinne einer Erniedrigung der Übersetzung geschieht, und/oder
- die Änderung (ΔMₘ) des Ausgangsmoments der Antriebseinheit (27) in Reaktion auf eine positive Schlupfgröße im Sinne einer Erniedrigung des Ausgangsmoments in Reaktion auf eine negative Schlupfgröße im Sinne einer Erhöhung des Ausgangsmoments geschieht.

4. Vorrichtung nach Anspruch 1, dadurch gekennzeichnet, daß
- das Ausmaß der Ansteuerung der Kupplung und/oder
- das Ausmaß der Änderung der Getriebeübersetzung, und/oder
- das Ausmaß der Änderung des Ausgangsmoments der Antriebseinheit und/oder
- das Ausmaß der Änderung des Anpreßdrucks
abhängig ist von dem Ausmaß der erfaßten Schlupfgröße (S).

5. Vorrichtung nach Anspruch 1 oder 2, dadurch gekennzeichnet, daß das Getriebe ein maximal übertragbares Moment (M_{get,max}) aufweist und gleichzeitig oder zeitlich nach der Ansteuerung (ΔM_{K}) der Kupplung im Sinne eines Öffnens der Kupplung eine Änderung (Δi) der Getriebeübersetzung und/oder eine Änderung (ΔMₘ) des momentanen Ausgangsmoments der Antriebseinheit und/oder eine Änderung des Anpreßdrucks (ΔF) derart getätigt wird, daß das vom Getriebe maximal übertragbare Moment (M_{get,max}) vom Betrag her größer wird als der Betrag (Mₘ) des momentanen Ausgangsmoments der Antriebseinheit.

6. Vorrichtung nach Anspruch 1, dadurch gekennzeichnet, daß in Reaktion darauf, daß das vom Getriebe maximal übertragbare Moment (M_{get,max}) vom Betrag her größer wird als der Betrag (Mₘ) des momentanen Ausgangsmoments der Antriebseinheit, die Kupplung (28) im Sinne eines Schließens Öffnens der Kupplung geschieht.

7. Vorrichtung nach Anspruch 1 oder 2, dadurch gekennzeichnet, daß die Änderung (ΔMₘ) des Ausgangsmoments der Antriebseinheit zur Schlupfverminderung unterstützend zu wenigstens einer der anderen Maßnahmen (Kupplungsansteuerung und/oder Änderung der Getriebeübersetzung und/oder des Anpreßdrucks) getätigt wird.

8. Vorrichtung nach Anspruch 1, dadurch gekennzeichnet, daß das Getriebe (29) ein Umschlingungsgetriebe ist und die Antriebsseite und/oder die Abtriebsseite wenigstens ein axial verschiebbares Element (5, 6) aufweist, das im wesentlichen die Form einer Kegelscheibe besitzt, und als Wirkmittel (9) wenigstens ein Band, vorzugsweise ein Schubgliederband, oder ein Riemen oder eine Kette zwischen Scheibenpaaren, die die Antriebs- und die Abtriebsseite darstellen, eingespannt ist.

9. Verfahren zur Steuerung eines stufenlos in seiner Übersetzung verstellbaren Getriebes (4) bei einem Kraftfahrzeug, wobei das Getriebe zusammen mit einer ein einstellbares Antriebsmoment (Mₘ) aufweisenden Antriebseinheit (1; 27) in dem Antriebsstrang des Kraftfahrzeugs angeordnet ist, eine Antriebsseite sowie eine Abtriebsseite und Wirkmittel (9) zur Herstellung einer mechanischen Wirkverbindung zwischen der Antriebs- und Abtriebsseite aufweist, und eine den Schlupf zwischen den Wirkmitteln und der Antriebs- und/oder Abtriebsseite repräsentierende Schlupfgröße (S) erfaßt wird und in Reaktion auf einen vorgebbaren Wert der Schlupfgröße als vorgebbare Maßnahme (26) eine Änderung (Δi) der Getriebeübersetzung (i) eingeleitet wird,
dadurch gekennzeichnet, daß
als zusätzliche weitere Maßnahme (25, 23)
- eine Änderung (ΔF) des Anpreßdrucks zwischen der Antriebs- und/oder Abtriebsseite. und dem Wirkmittel im Sinne einer Schlupfverminderung, und/oder
- eine Ansteuerung (ΔM_{K}) einer in dem Antriebsstrang angeordneten Kupplung (28) vorgesehen ist.

10. Verfahren nach Anspruch 9, dadurch gekennzeichnet, daß als Maßnahme
- die Ansteuerung (ΔM_{K}) der Kupplung (28) im Sinne eines Öffnens der Kupplung geschieht, und/oder
- die Änderung (Δi) der Getriebeübersetzung (i) in Reaktion auf eine positive Schlupfgröße im Sinne einer Erhöhung der Übersetzung und in Reaktion auf eine negative Schlupfgröße im Sinne einer Erniedrigung der Übersetzung geschieht, und/oder
- eine Änderung des Ausgangsmoments (ΔMₘ) der Antriebseinheit (27) in Reaktion auf eine positive Schlupfgröße im Sinne einer Erniedrigung des Ausgangsmoments in Reaktion auf eine negative Schlupfgröße im Sinne einer Erhöhung des Ausgangsmoments geschieht,
wobei insbesondere vorgesehen ist, daß
- das Ausmaß der Ansteuerung der Kupplung und/oder
- das Ausmaß der Änderung der Getriebeübersetzung, und/oder
- das Ausmaß der Änderung des Ausgangsmoments der Antriebseinheit
abhängig ist von dem Ausmaß der erfaßten Schlupfgröße und als weitere Maßnahme eine Änderung des Anpreßdrucks zwischen der Antriebs- und/oder Abtriebsseite und dem Wirkmittel, insbesondere im Sinne einer Schlupfverminderung, vorgesehen ist.

## Claims

1. Device for controlling a transmission (4) of continuously variable ratio in a motor vehicle, the transmission being arranged, together with a drive unit (1; 27) having an adjustable driving torque (Mₘ), in the drive train of the motor vehicle, having a driving side and a driven side and operative means (9) for making a mechanical operative connection between the driving side and driven side, and detection means (24) for detecting a slip variable (S) representing the slip between the operative means and the driving side and/or driven side, and means (21) by which a change (Δi) in the transmission ratio (i) is initiated as a predeterminable measure (26) in reaction to a predeterminable value of the slip variable, characterized in that, as an additional further measure (25, 23),
- a change (ΔF) in the applied pressure between the driving side and/or the driven side and the operative means with the effect of a reduction in slip and/or
- an activation (ΔM_{K}) of a clutch (28) arranged in the drive train is provided.

2. Device according to Claim 1, characterized in that, as a further measure (22), a change (ΔMₘ) in the output torque of the drive unit (27) is initiated.

3. Device according to Claim 1 or 2, characterized in that, as a measure,
- the activation (ΔM_{K}) of the clutch (28) takes place with the effect of an opening of the clutch, and/or
- the change (Δi) in the transmission ratio (i) in reaction to a positive slip variable takes place with the effect of an increase in the ratio and in reaction to a negative slip variable takes place with the effect of a decrease in the ratio and/or
- the change (ΔMₘ) in the output torque of the drive unit (27) in reaction to a positive slip variable takes place with the effect of a decrease in the output torque and in reaction to a negative slip variable takes place with the effect of an increase in the output torque.

4. Device according to Claim 1, characterized in that
- the amount of activation of the clutch and/or
- the amount of change in the transmission ratio and/or
- the amount of change in the output torque of the drive unit and/or
- the amount of change in the applied pressure
is dependent on the amount of the detected slip variable (S).

5. Device according to Claim 1 or 2, characterized in that the transmission has a maximum transmittable torque (M_{get,max}) and, simultaneously with or chronologically after the activation (ΔM_{K}) of the clutch with the effect of an opening of the clutch, a change (Ai) in the transmission ratio and/or a change (ΔMₘ) in the instantaneous output torque of the drive unit and/or a change in the applied pressure (ΔF) is effected in such a way that the maximum torque (M_{get,max}) which is capable of being transmitted by the transmission becomes greater in amount than the amount (Mₘ) of the instantaneous output torque of the drive unit.

6. Device according to Claim 1, characterized in that, in reaction to the fact that the maximum torque (M_{get,max}) capable of being transmitted by the transmission becomes greater in amount than the amount (Mₘ) of the instantaneous output torque of the drive unit, coupling (28) takes place with the effect of a closing/opening of the clutch.

7. Device according to Claim 1 or 2, characterized in that the change (ΔMₘ) in the output torque of the drive unit for the reduction of slip is effected as a back-up to at least one of the other measures (clutch activation and/or change in the transmission ratio and/or in the applied pressure).

8. Device according to Claim 1, characterized in that the transmission (29) is a wrap-around transmission and the driving side and/or the driven side has at least one axially displaceable element (5, 6), which is essentially in the form of a cone pulley, and, as operative means (9), at least one band, preferably a thrust-type link band, or a belt or a chain is clamped between pairs of pulleys which constitute the driving side and the driven side.

9. Method of controlling a transmission (4) of continuously variable ratio in a motor vehicle, the transmission being arranged, together with a drive unit (1; 27) having an adjustable driving torque (Mₘ), in the drive train of the motor vehicle, having a driving side and a driven side and operative means (9) for making a mechanical operative connection between the driving side and driven side, and a slip variable (S) which represents the slip between the operative means and the driving side and/or driven side being detected and a change (Δi) in the transmission ratio (i) being initiated as a predeterminable measure (26) in reaction to a predeterminable value of the slip variable, characterized in that, as an additional further measure (25, 23),
- a change (ΔF) in the applied pressure between the driving side and/or the driven side and the operative means with the effect of a reduction in slip and/or
- an activation (ΔM_{K}) of a clutch (28) arranged in the drive train
is provided.

10. Method according to Claim 9, characterized in that, as a measure,
- the activation (ΔM_{K}) of the clutch (28) takes place with the effect of an opening of the clutch, and/or
- the change (Δi) in the transmission ratio (i) in reaction to a positive slip variable takes place with the effect of an increase in the ratio and in reaction to a negative slip variable takes place with the effect of a decrease in the ratio and/or
- a change (ΔMₘ) in the output torque of the drive unit (27) in reaction to a positive slip variable takes place with the effect of a decrease in the output torque and in reaction to a negative slip variable takes place with the effect of an increase in the output torque,
there being provision, in particular, for
- the amount of activation of the clutch and/or
- the amount of change in the transmission ratio and/or
- the amount of change in the output torque of the drive unit
to be dependent on the amount of the detected slip variable, and,
as a further measure, a change in the applied pressure between the driving side and/or driven side and the operative means, in particular with the effect of a reduction in slip, to be provided.

## Revendications

1. Dispositif de commande d'une transmission à variation continue (4) d'un véhicule automobile, dans lequel :
• la transmission (4) est montée dans la ligne de transmission du véhicule, en même temps qu'une unité d'entraînement (1; 27) fournissant un couple d'entraînement réglable (Mₘ),
• la transmission comporte un côté d'entrée et un côté de sortie, ainsi qu'un moyen actif (9) établissant une liaison mécanique active entre les côtés d'entrée et de sortie,
• on prévoit des moyens de détection (24) pour saisir une grandeur de patinage (S) représentant le patinage entre les moyens actifs et le côté d'entrée et/ou le côté de sortie, et également des moyens (21) par lesquels, en réaction au cas où la grandeur de patinage atteint une valeur préimposée, on procède, en tant que mesure préimposée (26), à une modification (Δi) du rapport (i) de la transmission,
caractérisé en ce qu'
• on prévoit, en tant que mesure complémentaire (25, 23)
• une modification (ΔF) de la pression d'application existant entre le moyen actif et le côté d'entrée et/ou de sortie de la transmission, cette modification allant dans le sens de la réduction du patinage, et/ou
• une commande (ΔMₖ) d'un embrayage monté dans la ligne de transmission.

2. Dispositif selon la revendication 1,
caractérisé en ce que
comme mesure complémentaire (22) on effectue une modification (ΔMₘ) du couple de sortie de l'unité d'entraînement (27).

3. Dispositif selon la revendication 1 ou 2,
caractérisé en ce qu'
en tant que mesure :
• la commande (ΔMₖ) de l'embrayage (28) s'effectue dans le sens d'une ouverture de l'accouplement et/ou
• la modification (Δi) du rapport (i) de la transmission, en réaction à une grandeur de patinage positive, s'effectue dans le sens d'une augmentation du rapport, tandis qu'en réaction à une grandeur de patinage négative, elle s'effectue dans le sens d'une réduction du rapport de la transmission, et/ou
• la modification (ΔMₘ) du couple de sortie de l'unité d'entraînement (27), en réaction à une grandeur de patinage positive, s'effectue dans le sens d'une réduction du couple de sortie tandis qu'en réaction à une grandeur de patinage négative, elle s'effectue dans le sens d'une augmentation du couple de sortie.

4. Dispositif selon la revendication 1,
caractérisé en ce que
• la dimension de la commande de l'embrayage et/ou
• la dimension de la variation du rapport de la transmission, et/ou
• la dimension de la variation du couple de sortie de l'unité d'entraînement et/ou
• la dimension de la variation de la pression d'application,
dépendent de la dimension de la grandeur de patinage (S) détectée.

5. Dispositif selon la revendication 1 ou 2,
caractérisé en ce que
la transmission présente un couple maximal transmissible (M_{get, max}) et, en même temps ou après la commande (ΔMₖ) de l'embrayage dans le sens de l'ouverture de celui-ci, on effectue une modification (Δi) du rapport de transmission et/ou une modification (ΔMₘ) du couple instantané de sortie de l'unité d'entraînement et/ou une modification de la pression d'application (ΔF), de manière que le moment maximal (M_{get, max}) que peut transmettre la transmission, atteigne une dimension supérieure à celle (Mₘ) du couple instantané de sortie de l'unité d'entraînement.

6. Dispositif selon la revendication 1,
caractérisé en ce que
quand la dimension du couple maximal (M_{get, mas}) que peut transmettre la transmission, atteint une dimension supérieure à celle (Mₘ) du couple instantané de sortie de l'unité d'entraînement, l'embrayage (28) est actionné en réaction dans le sens d'une fermeture-ouverture.

7. Dispositif selon la revendication 1 ou 2,
caractérisé en ce que
la modification (ΔMₘ) du couple de sortie de l'unité d'entraînement pour réduire le patinage, est mise en oeuvre en soutien d'au moins l'une des autres mesures (commande de l'embrayage et/ou modification du rapport de transmission et/ou de la pression d'application).

8. Dispositif selon la revendication 1,
caractérisé en ce que
la transmission (29) est une transmission à enroulement et son côté d'entrée et/ou son côté de sortie comporte un élément (5, 6) à coulissement axial, présentant la forme d'un disque conique, le moyen actif (9) comprenant au moins une bande, de préférence une bande à organes de poussée, ou une courroie ou une chaîne tendue entre deux paires de disques représentant le côté d'entrée et le côté de sortie.

9. Procédé pour commander une transmission à variation continue (4) d'un véhicule selon lequel :
• la transmission (4) est montée dans la ligne de transmission du véhicule, en même temps qu'une unité d'entraînement (1; 27) fournissant un couple d'entraînement réglable (Mₘ),
• la transmission comporte un côté d'entrée et un côté de sortie, ainsi qu'un moyen actif (9) établissant une liaison mécanique active entre les côtés d'entrée et de sortie,
• on prévoit des moyens de détection (24) pour saisir une grandeur de patinage (S) représentant le patinage entre les moyens actifs et le côté d'entrée et/ou le côté de sortie, et également des moyens (21) par lesquels, en réaction quand la grandeur de patinage atteint une valeur préimposée, on procède en tant que mesure préimposée (26), à une modification Δi du rapport (i) de la transmission,
on prévoit, en tant que mesure complémentaire (25, 23)
• une modification (ΔF) de la pression d'application existant entre le moyen actif et le côté d'entrée et/ou de sortie de la transmission, cette modification allant dans le sens de la réduction du patinage, et/ou
• une commande (ΔMₖ) d'un embrayage monté dans la ligne de transmission.

10. Procédé selon la revendication 9,
caractérisé en ce qu'
en tant que mesure :
• la commande (ΔMₖ) de l'embrayage (28) s'effectue dans le sens de l'ouverture de l'accouplement et/ou
• la modification (Δi) du rapport (i) de la transmission, en réaction à une grandeur de patinage positive, s'effectue dans le sens d'une augmentation du rapport, tandis qu'en réaction à une grandeur de patinage négative, elle s'effectue dans le sens de réduction du rapport de la transmission, et/ou
• la modification (ΔMₘ) du couple de sortie de l'unité d'entraînement (27), en réaction à une grandeur de patinage positive, s'effectue dans le sens d'une réduction du couple de sortie, tandis qu'en réaction à une grandeur de patinage négative, elle s'effectue dans le sens d'une augmentation du couple de sortie,
étant, prévu en particulier que
• la dimension de la commande de l'embrayage, et/ou
• la dimension de la variation du rapport de la transmission, et/ou
• la dimension de la variation du couple de sortie de l'unité d'entraînement
dépendent de la dimension de la grandeur de patinage (S) détectée ; et que
comme autre mesure, on prévoit une modification de la pression d'application entre le côté d'entrée et/ou le côté de sortie et le moyen actif, en particulier dans le sens d'une réduction du patinage.
